# EUROPÄISCHE PATENTSCHRIFT

(11) **EP 1 427 952 B1**
(45) Veröffentlichungstag und Bekanntmachung des Hinweises auf die Patenterteilung: **22.06.2005**
(21) Anmeldenummer: 02774577.7
(22) Anmeldetag: 06.09.2002
(51) Int. Cl.: F16F 15/121

(54) **TORSIONSSCHWINGUNGSDÄMPFER**
TORSIONAL VIBRATION DAMPER
AMORTISSEUR DE VIBRATIONS TORSIONNELLES

(30) Priorität: 11.09.2001 DE 10144682
(43) Veröffentlichungstag der Anmeldung: 16.06.2004
(73) Patentinhaber: Volkswagen Aktiengesellschaft, 38436 Wolfsburg (DE)
(72) Erfinder: FRANKE, Jens, Erik, 38518 Gifhorn (DE)
(86) Internationale Anmeldenummer: PCT/EP2002/009987
(87) Internationale Veröffentlichungsnummer: WO 2003/023253

(56) Entgegenhaltungen:
- EP-A- 1 028 269
- EP-A- 1 092 501
- WO-A-02/12751
- DE-A- 1 526 475
- DE-A- 2 818 295
- DE-A- 2 912 090
- DE-A- 3 729 975
- DE-U- 1 967 944
- FR-A- 1 374 234
- GB-A- 1 239 450
- US-A- 2 573 398
- US-A- 4 422 347

## Beschreibung

Die Erfindung betrifft einen Torsionsschwingungsdämpfer für eine Kurbelwelle einer Brennkraftmaschine mit einem Gehäuse und einer in dem Gehäuse angeordneten und in einem Fluid eingebetteten Dämpfermasse, wobei die Dämpfermasse mit dem Gehäuse über eine Federeinrichtung mit Blattfedern verbunden ist, gemäß dem Oberbegriff des Anspruchs 1.

Aus der EP 1 028 269 A1 ist ein gattungsgemäßer Torsionsschwingungsdämpfer bekannt, bei dem im axialen Bereich einer Kurbel der Kurbelwelle eine als Torsionsfeder ausgebildete Nabe drehfest mit der Kurbelwelle verbunden ist, an der über waagebalkenartige Arme axial beabstandet zu einem Pleuel Dämpfermassen angekoppelt sind. Durch ein Gehäuse ist ein Raum ausgebildet, in dem ein Fluid mit entsprechender Viskosität zum Dämpfen von Schwingungen angeordnet ist.

Aus DE 19 67 944 ist ein Drehschwingungsdämpfer bekannt, bei dem eine sekundäre Schwungmasse drehbar innerhalb eines Gehäuses geführt ist. Die Schwungmasse besteht aus einem radial äußeren Teilring mit radialen Passbohrungen zur Lagerung von Federstäben. Der äußere Teilring ist mit einem konzentrischen inneren Teilring drehfest verbunden. Die Federstäbe erstrecken sich von dem äußeren Teilring durch den inneren Teilring in ein Antriebsteil hinein.

Aus Dokument DE 28 18 295 A, welches als nächstliegender Stand der Technik angesehen wird, ist ein viskohydraulischer Drehschwingungsdämpfer mit blattfedergestütztem Schwungring bekannt. Blattfedern sind an gegenüberliegenden Enden mit einem Schwungring 1 verbunden und in ihrem mittleren Bereich in sich rechtwinklig schneidenden Schlitzen im Gehause festgespannt.

Der Erfindung liegt die Aufgabe zugrunde, einen Torsionsschwingungsdämpfer der obengenannten Art bzgl. Aufbau zu vereinfachen und bezüglich seiner Wirkung zu verbessern.

Diese Aufgabe wird erfindungsgemäß durch einen Torsionsschwingungsdämpfer der o.g. Art mit den in Anspruch 1 gekennzeichneten Merkmalen gelöst. Vorteilhafte Ausgestaltungen der Erfindung sind in den abhängigen Ansprüchen angegeben.

Dazu ist es erfindungsgemäß vorgesehen, dass wenigstens zwei Blattfedern mit einem Ende mit dem Gehäuse und mit einem gegenüberliegenden Ende mit der Dämpfermasse verbunden sind und dass die Blattfedern derart angeordnet sind, dass diese auf die Dämpfermasse eine Rückstellkraft sowohl entgegen einer auf die Dämpfermasse wirkenden Fliehkraft als auch entgegen einer Auslenkung der Dämpfermasse in Umfangsrichtung ausüben, so dass ein Anschlagen der Dämpfermasse am Gehäuse vermieden ist.

Dies hat den Vorteil, dass ein Verlust der Tilgerwirkung durch Anliegen der Dämpfermasse am Gehäuse für alle Betriebszustände wirksam vermieden ist.

Eine hohe Integration in die Kurbelwelle mit wenig Bauraumbedarf erzielt man dadurch, dass das Gehäuse als Teil eines Gegengewichtes und/oder einer Kurbelwange einer Kurbel der Kurbelwelle ausgebildet ist.

Einen besonders einfachen Aufbau und eine einfache Montage erzielt man dadurch, dass die Dämpfermasse einstückig ausgebildet ist.

In einer bevorzugten Ausführungsform weist die Dämpfermasse für jede Blattfeder eine Nut aufweist, in die ein Abschnitt der Blattfeder zwischen den Enden eingreift. Die Blattfedern weisen an ihren Enden jeweils eine zylinderförmige Verdickung auf, die in entsprechende zylinderförmige Ausnehmungen am Gehäuse bzw. in der Dämpfermasse eingreifen.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnung. Diese zeigt in
- Fig. 1: eine bevorzugte Ausführungsform eines erfindungsgemäßen Torsionsschwingungsdämpfers in teilweise montiertem Zustand in perspektivischer Ansicht,
- Fig. 2: den Torsionsschwingungsdämpfer gemäß Fig. 1 in Explosionsdarstellung und
- Fig. 3: eine zweite bevorzugte Ausführungsform eines erfindungsgemäßen Torstonsschwingungsdämpfer in Explosionsdarstellung.

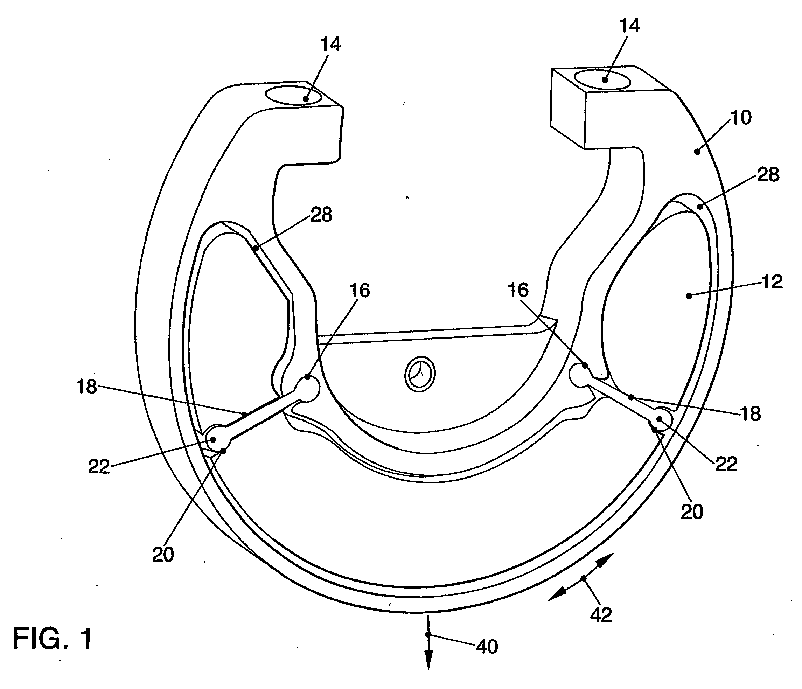

Die in Fig. 1 dargestellte, bevorzugte Ausführungsform eines erfindungsgemäßen Torsionsschwingungsdämpfers umfaßt ein Gehäuse 10, in dem eine Dämpfungsmasse 12 angeordnet ist. Das Gehäuse 10 ist als Teil einer Kurbelwange einer nicht dargestellten Kurbelwelle ausgebildet und ist gleichzeitig Teil eines Ausgleichsgewichtes für einen entsprechende Kurbeltrieb. Mittels Öffnungen 14 ist das Gehäuse 10 im Bereich einer Kurbelwange an der Kurbelwelle befestigbar.

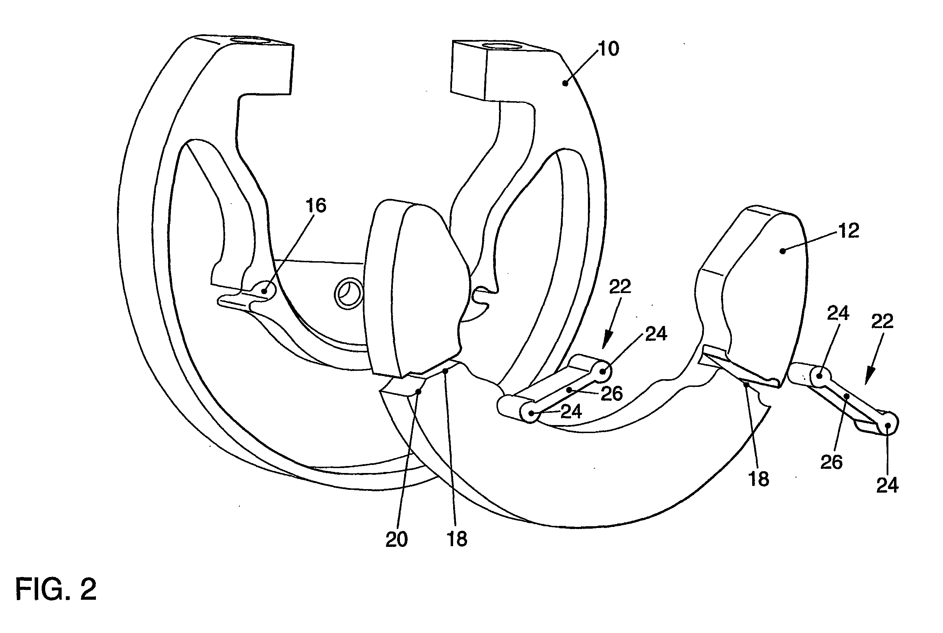

Wie aus Fig. 2 ersichtlich, weist das Gehäuse 10 zwei erste zylinderförmige Ausnehmungen 16 auf. Die Ausgleichsmasse 12 ist mit zwei länglichen Ausnehmungen 18 und diesen zugeordneten zweiten zylinderförmigen Ausnehmungen 20 ausgebildet. Die Ausnehmungen 16, 18 und 20 sind derart angeordnet und ausgebildet, daß bei in das Gehäuse 10 eingesetzter Dämpfungsmasse 12 die länglichen Ausriehmungen 18 der Dämpfungsmässe 12 mit zugeordneten ersten zylinderförmigen Ausnehmungen 16 des Gehäuses 10 fluchten, wobei die ersten und zweiten zylinderförmigen Ausnehmungen 16 und 20 an gegenüberliegenden Seiten der Dämpfungsmasse 12 angeordnet sind. Diese Ausnehmungen 16, 18 und 20 bilden einen im Querschnitt hantelförmigen Raum aus, in dem eine entsprechend ausgebildete Blattfeder 22 angeordnet ist. Die Blattfedern 22 sind daher entsprechend den Ausnehmungen 16, 18 und 20 an ihren Enden mit zylinderförmigen Verdickungen 24 ausgebildet, die über einen flachen Mittelabschnitt 26 der Blattfeder 22 miteinander verbunden sind.

Die Blattfedern 22 sind in den von den Ausnehmungen 16, 18 und 20 gebildeten Raum eingesteckt und verbinden die Dämpfungsmasse 12 mit dem Gehäuse 10 federnd derart, daß die Blattfedern 22 eine rückstellende Kraft auf die Dämpfungsmasse 12 in Umfangsrichtung 42 (Fig. 1), d.h. in und entgegengesetzt der Drehrichtung, ausüben, so daß sich eine entsprechende Tilgerwirkung ergibt. Ferner üben die Blattfedern 22 eine rückstellende Wirkung gegen eine auf die Dämpfungsmasse 12 wirkende Fliehkraft 40 (Fig. 1) aus, so daß ein radiales Anschlagen des Dämpfungsmasse 12 am Gehäuse 10 verhindert ist. Eine Dämpfung der Bewegung der Dämpfungsmasse 12 in dem Gehäuse 10 wird dadurch erzielt, daß in einem Zwischenraum 28 zwischen Gehäuse 10 und Dämpfungsmasse 12 eine Fluid geeigneter Viskosität, beispielsweise ein Silikonöl, angeordnet ist. Der Raum, in dem die Dämpfungsmasse 12 in dem Gehäuse 10 mit dem Dämpfungsfluid angeordnet ist, wird von einem in Fig. 1 und 2 nicht dargestellten Deckel verschlossen.

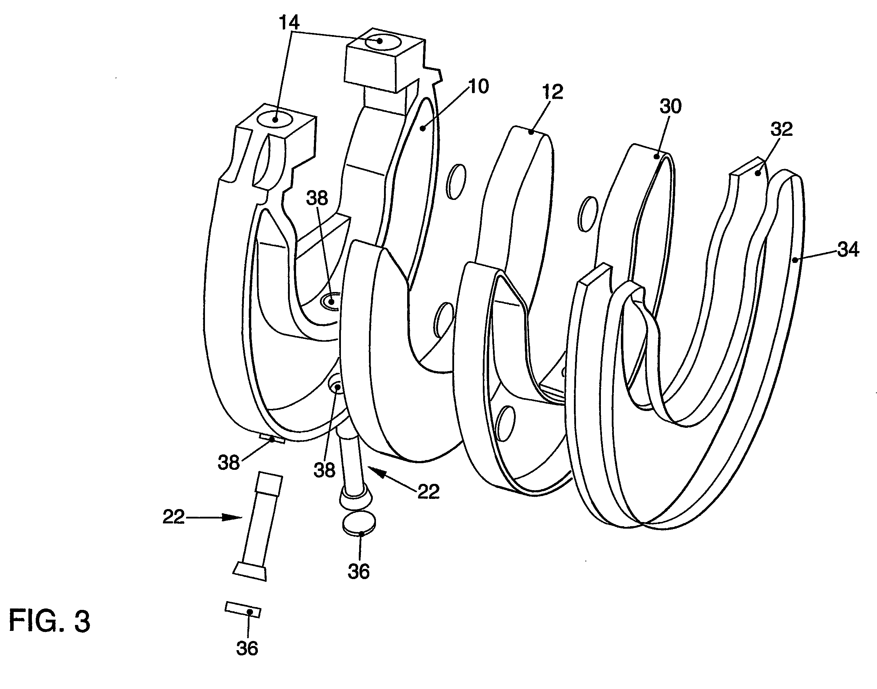

Fig. 3 zeigt eine zweite bevorzugte Ausführungsform eines erfindungsgemäßen Torsionsschwingungsdämpfers. In dieser Explosionsdarstellung ist der Zusammenbau des Torsionsschwingungsdämpfers illustriert. Neben den bereits aus Fig. 1 und 2 ersichtlichen Teilen, nämlich Gehäuse 10, Dämpfungsmasse 12 und Blattfedern 22, umfaßt der Torsionsschwingungsdämpfers das Dämpfungsfluid 30, den Deckel 32 und eine Schweißnaht 34, mit der der Deckel 30 am Gehäuse 10 befestigt ist. In der alternativen Ausführungsform gemäß Fig. 3 sind, im Unterschied zur Ausführungsform gemäß Fig. 1 und 2, in der Dämpfungsmasse 12 und im Gehäuse 10 radiale Bohrungen 38 zum Durchstecken der Blattfedern 22 ausgebildet, wobei in Fig. 3 nur die Bohrungen 38 des Gehäuses 10 sichtbar sind. Nach der Montage werden die Bohrungen im Gehäuse 10 nach außen hin mit entsprechenden Deckeln 36 dichtend verschlossen.

## Patentansprüche

1. Torsionsschwingungsdämpfer für eine Kurbelwelle einer Brennkraftmaschine mit einem Gehäuse (10) und einer in dem Gehäuse (10) angeordneten und in einem Fluid (30) eingebetteten Dämpfermasse (12), wobei die Dämpfermasse (12) mit dem Gehäuse (10) über eine Federeinrichtung (22) mit Blattfedern (22) verbunden ist und die wenigstens zwei Blattfedern (22) mit einem Ende mit dem Gehäuse (10) und mit einem gegenüberliegenden Ende mit der Dämpfermasse (12) verbunden sind, **dadurch gekennzeichnet, dass** die Blattfedern (22) derart angeordnet sind, dass diese auf die Dämpfermasse (12) eine Rucksteitkraft sowohl entgegen einer auf die Dämpfermasse (12) wirkenden Fliehkraft als auch entgegen einer Auslenkung der Dämpfermasse (12) in Umfangsrichtung ausüben, so dass ein Anschlagen der Dämpfermasse (12) am Gehäuse (10) vermieden ist.

2. Torsionsschwingungsdämpfer nach Anspruch 1, **dadurch gekennzeichnet, dass** das Gehäuse (10) als Teil eines Gegengewichtes und/oder einer Kurbelwange einer Kurbel der Kurbelwelle ausgebildet ist.

3. Torsionsschwingungsdämpfer nach Anspruch 1 oder 2, **dadurch gekennzeichnet, dass** die Dämpfermasse (12) einstückig ausgebildet ist.

4. Torsionsschwingungsdämpfer nach wenigstens einem der vorhergehenden Ansprüche, **dadurch gekennzeichnet, dass** die Dämpfermasse (12) für jede Blattfeder (22) eine Nut (18) aufweist, in die ein Abschnitt (26) der Blattfeder (22) zwischen den Enden eingreift.

5. Torsionsschwingungsdämpfer nach wenigstens einem der vorhergehenden Ansprüche, **dadurch gekennzeichnet, dass** die Blattfedern (22) an ihren Enden jeweils eine zylinderförmige Verdickung (24) aufweisen, die in entsprechende zylinderförmige Ausnehmungen (16, 20) am Gehäuse (10) bzw. in der Dämpfermasse (12) eingreifen.

## Claims

1. Torsional-vibration damper for a crankshaft of an internal combustion engine, with a housing (10) and with a damper mass (12) arranged in the housing (10) and embedded in a fluid (30), the damper mass (12) being connected to the housing (10) via a spring device (22) having leaf springs (22), and the at least two leaf springs (22) being connected at one end to the housing (10) and at an opposite end to the damper mass (12), **characterized in that** the leaf springs (22) are arranged in such a way that they exert a return force on the damper mass (12) both counter to a centrifugal force acting on the damper mass (12) and counter to a deflection of the damper mass (12) in the circumferential direction, so that a butting of the damper mass (12) against the housing (10) is avoided.

2. Torsional-vibration damper according to Claim 1, **characterized in that** the housing (10) is designed as part of a counterweight and/or of a crank web of a crank of the crankshaft.

3. Torsional-vibration damper according to Claim 1 or 2, **characterized in that** the damper mass (12) is formed in one piece.

4. Torsional-vibration damper according to at least one of the preceding claims, **characterized in that** the damper mass (12) has, for each leaf spring (22), a groove (18), into which a portion (26) of the leaf spring (22) located between the ends of the latter engages.

5. Torsional-vibration damper according to at least one of the preceding claims, **characterized in that** the leaf springs (22) have a cylindrical thickening (24) at each of their ends, the said thickenings engaging in corresponding cylindrical recesses (16, 20) on the housing (10) and in the damper mass (12), respectively.

## Revendications

1. Amortisseur de vibrations torsionnelles pour un vilebrequin d'un moteur à combustion interne comprenant un carter (10) et une masse d'amortissement (12) disposée dans le carter (10) et noyée dans un fluide (30), la masse d'amortissement (12) étant connectée au carter (10) par le biais d'un système de ressort (22) avec des ressorts à lames (22), et les au moins deux ressorts à lames (22) sont connectés à une extrémité au carter (10) et à une extrémité opposée à la masse d'amortissement (12), **caractérisé en ce que** les ressorts à lames (22) sont disposés de telle sorte qu'ils exercent sur la masse d'amortissement (12) une force de rappel aussi bien à rencontre de la force centrifuge agissant sur la masse d'amortissement (12) qu'à l'encontre d'une déviation de la masse d'amortissement (12) dans la direction périphérique, de sorte qu'un choc de la masse d'amortissement (12) contre le carter (10) soit évité.

2. Amortisseur de vibrations torsionnelles selon la revendication 1, **caractérisé en ce que** le carter (10) est réalisé sous la forme d'un contrepoids et/ou d'un flasque de manivelle d'une manivelle du vilebrequin.

3. Amortisseur de vibrations torsionnelles selon la revendication 1 ou 2, **caractérisé en ce que** la masse d'amortissement (12) est réalisée d'une seule pièce.

4. Amortisseur de vibrations torsionnelles selon au moins l'une quelconque des revendications précédentes, **caractérisé en ce que** la masse d'amortissement (12) présente pour chaque ressort à lames (22) une rainure (18), dans laquelle une portion (26) du ressort à lames (22) vient en prise entre les extrémités.

5. Amortisseur de vibrations torsionnelles selon au moins l'une quelconque des revendications précédentes, **caractérisé en ce que** les ressorts à lames (22) présentent chacun à leurs extrémités un épaississement cylindrique (24), qui vient en prise dans des évidements cylindriques correspondants (16, 20) sur le carter (10), respectivement dans la masse d'amortissement (12).
